# EUROPEAN PATENT SPECIFICATION

(11) **EP 3 303 821 B1**
(45) Date of publication and mention of the grant of the patent: **24.07.2019**
(21) Application number: 17737862.7
(22) Date of filing: 28.06.2017
(51) Int. Cl.: F02M 65/00, G01M 15/05, F02B 77/04, F02B 75/12, F02D 41/38

(54) **METHOD FOR MAXIMIZING THE FORMATION OF DEPOSITS IN INJECTOR NOZZLES OF GDI ENGINES**
VERFAHREN ZUR MAXIMIERUNG DER BILDUNG VON BELÄGEN IN EINSPRITZDÜSEN VON GDO-MOTOREN
PROCÉDÉ POUR OPTIMISER LA FORMATION DE DÉPÔTS DANS DES BUSES D'INJECTEURS DE MOTEURS GDI

(30) Priority: 28.06.2016 BR 102016015228
(43) Date of publication of application: 11.04.2018
(73) Proprietor: Petróleo Brasileiro S.A. - Petrobras, 20031-912 Rio de Janeiro RJ (BR)
(72) Inventor: PEREIRA DE OLIVEIRA, Paulo Cesar, 20231-030 Rio de Janeiro (BR); BASTOS MACHADO, Guilherme, 24220-111 Rio de Janeiro (BR); CAVALCANTE CORDEIRO DE MELO, Tadeu, 22260-020 Rio de Janeiro (BR); LAURENTYS AIROLDI, Marcelo, 05459-000 São Paulo (BR); NOHRA CHAAR DE SOUZA, Renata, 22793-105 Rio de Janeiro (BR); GOMES DIAS, Flávio, 04142-081 São Paulo (BR); YVESTURKOVICS, Franck, 06345-170 São Paulo (BR); LIRA DA SILVA, Pedro Artur, Rio de Janeiro (BR)
(74) Representative: J A Kemp
(86) International application number: PCT/GB2017/051884
(87) International publication number: WO 2018/002610

(56) References cited:
- WO-A1-2005/040599
- WO-A1-2017/102891
- "SIDI Engine Fuel Injector Deposit Forming Method", RESEARCH DISCLOSURE, KENNETH MASON PUBLICATIONS, HAMPSHIRE, UK, GB, vol. 584, no. 62, 1 December 2012 (2012-12-01), page 1090, XP007141823, ISSN: 0374-4353
- ALLEN A. ARADI: "The effect of fuel composition and engine operating parameters on injector deposits in a high-pressure direct injection gasoline (DIG) research engine", SAE TECHNICAL PAPERS, no. 1999-01-3690, 25 October 1999 (1999-10-25), - 28 October 1999 (1999-10-28), XP002774551, Toronto, Ontario, Canada

## Description

### FIELD OF THE INVENTION

The present invention relates to fuel injection technologies in engines. More particularly, the present invention relates to technology for direct injection of gasoline in automotive engines.

### BACKGROUND OF THE INVENTION

Direct injection of gasoline (GDI - *Gasoline Direct Injection*) is an advanced injection technology for spark-ignition engines which, owing to the high operating pressures (above 100 bar) and sophisticated strategies for multipoint injection combined with supercharging, allows reduction of engine size, better performance and significant reductions in fuel consumption and atmospheric emissions. This technology has been widely used in automobiles in order to comply with trends for reduction of emissions required by the regulations in various countries and markets.

Recently there have been problems in the field with some models of GDI engines that showed loss of power caused by excessive deposits in the injector nozzles. Investigation showed that the deposits were linked to contamination of gasoline C (gasoline containing ethanol) sold in some specific locations. These problems occurred in GDI engines even though the gasoline was within the ANP specification and no problems had been reported with vehicles with conventional indirect injection (in the admission manifold).

There was therefore a need for a method for assessing the effect of various impurities and/or additives present in the fuel in injector nozzles of GDI engines in the laboratory, and urgently, so that the results could be obtained and assessed as soon as possible.

After searching the prior art, methodologies were identified for simulating the build-up of deposits in injectors employed in other types of engines. Document FR2981451, for example, discloses a method for simulating the build-up of deposits in an injector of a diesel engine, said simulation being carried out in a diesel engine comprising such an injector. The method consists of determining the physicochemical mechanisms involved in the formation of deposits and selecting at least one operating parameter of the engine and/or of the fluid (fuel) supplied to said engine. Then the formation of deposits in the injector is simulated, controlling the parameters selected for reproducing the physicochemical mechanisms involved in said build-up of deposits.

However, the methodology described in document FR2981451 was developed entirely on the basis of specific parameters and behaviour of the diesel engine and additives in diesel fuel. Thus, that method cannot be applied for injector nozzles of GDI engines.

In the light of the foregoing, it is necessary to develop a specific method for testing the formation of deposits in injector nozzles of GDI engines in the laboratory, to assess the effects of various additives present in the fuel on the formation of these deposits.

As will be explained in more detail below, the present invention aims to at least partly solve the problems of the prior art described above in a practical and efficient manner.

"SIDI Engine Fuel Injector Deposit Forming Method", RESEARCH DISCLOSURE, KENNETH MASON PUBLICATIONS, HAMPSHIRE, UK, GB, (20121201), vol. 584, no. 62, ISSN 0374-4353, page 1090, dislcoses a method to form deposits on and in the tip of a spark ignited direct injected gasoline internal combustion engine fuel injector. This SIDI engine operating test cycle is fueled by a fuel blend whose chemistry forms deposits in and on the fuel injectors which can be measured by the change in engine calibration necessary to overcome the injector deposit effect. Injector deposit level is quantified by the increase in the calibration multiplier, which increases the amount of fuel required to hold the air to fuel ratio at the desired level.

### SUMMARY OF THE INVENTION

A first aim of the present invention is to provide a method for maximizing the formation of deposits in injector nozzles of GDI engines that is able to reproduce severe conditions of deposition of material in a few days, so that, in a short period of time, the fuel tested can be assessed for its tendency to form deposits.

A second aim of the present invention is to provide a method for maximizing the formation of deposits in injector nozzles of GDI engines that can be carried out completely automatically, without supervision and without interruption.

In order to achieve the aims described above, the present invention provides a method for maximizing the formation of deposits in injector nozzles of GDI engines, as defined in the claims.

According to the invention, there is provided a method for maximizing the formation of deposits in injector nozzles of gasoline direct injection, GDI, engines, wherein the method comprises at least one test cycle, and each test cycle comprises at least one testing step in which a predetermined condition of speed and load of the GDI engine is maintained for a specified period of time, wherein, in said test cycle, there is at least one testing step in which: the engine speed is maintained between 1300 and 3700 rpm; the engine load is maintained between 10 and 80%; and the specified period of time is from 10 to 200 minutes; and wherein the method further comprises a testing step that lasts from 70 to 110 minutes, comprises an engine speed between 1300 and 1700 rpm and an engine load between 25 and 35%. Optionally, the test cycle includes at least two testing steps, and the testing step conditions (i.e. at least one of engine speed and engine load) are varied between testing steps, thus varying the engine temperature.

Optionally, each one of the at least one test cycle comprises at least five testing steps. Optionally at least one of those testing steps has different testing step conditions (i.e. at least one of engine speed and engine load) to the others.

Optionally a second testing step, which lasts from 160 to 200 minutes, comprises an engine speed between 1800 and 2200 rpm and an engine load between 10 and 20%

Optionally a third testing step, which lasts from 40 to 80 minutes, comprises an engine speed between 1300 and 1700 rpm and an engine load between 70 and 80%.

Optionally a fourth testing step, which lasts from 130 to 170 minutes, comprises an engine speed between 2300 and 2700 rpm and an engine load between 45 and 55%.

Optionally a fifth testing step, which lasts from 70 to 110 minutes, comprises an engine speed between 3300 and 3700 rpm and an engine load between 45 and 55%.

Optionally at least one test cycle additionally comprises a sixth testing step, which lasts from 10 to 50 minutes, in which the engine is switched off.

Optionally the engine speed and load are maintained at a constant value, selected between the maximum and minimum values, for each testing step, for the respective specified period of time. Alternatively, at least one of engine speed and load is variable between the maximum and minimum values stipulated for each condition/step for the respective specified period of time. In a further alternative, some steps may be performed with constant engine speed and load, and other steps may be performed with variable engine speed and load.

Optionally each test cycle is repeated 5 to 10 times.

Optionally the method is carried out automatically and unsupervised by a system of automation.

Optionally the system of automation controls, during execution of the method, at least one of: the engine operating conditions, temperature of the admission air, cooling water temperature, oil temperature and fuel temperature.

### DETAILED DESCRIPTION OF THE INVENTION

Firstly, it should be pointed out that the following description will be based on preferred embodiments of the invention. As will be obvious to a person skilled in the art, however, the invention is not limited to these particular embodiments.

The proposed solution to the problem of testing the formation of deposits in injector nozzles involves trying to make the formation of deposits in the injector nozzles as severe as possible. This allows an assessment of the way a particular fuel causes deposit formation to be arrived at as quickly as possible. Taking this approach involves finding the main factors that affect the rate of deposition and the amount of material deposited. After conducting various tests, it was observed that for this type of injection system (GDI), high temperatures of the injector nozzles give an increase in the formation of deposits therein. This is surprising, since it might be expected that higher temperatures would lead to more complete combustion and thus lower amounts of deposits. The relationship may be observed, for example, by examining the temperature profile in the injector nozzle over time. The temperature profile obtained can be compared, for example, with some measured parameter indicative of the presence of deposition in the injector nozzles. Preferably, the parameter measured is the "Injection Correction Factor" (discussed below), which is directly related to the presence of deposits in the injector nozzles.

The injection correction factor is a parameter of the program of an engine's electronic injection system that adjusts the fuel injection time to maintain the design conditions of the air/fuel mixture, if there is any deviation from the original factory calibration. Injector nozzles partially obstructed with deposits may show loss of flow rate or change in the configuration of the jet, which compromise formation of the mixture and the combustion process. In this case, the engine's electronic injection system recognizes, from monitoring of the exhaust gas by a lambda probe, changes in the quality of the mixture and adjusts the injection time, by altering the value of the injection correction factor.

Therefore a comparison between the profile of fuel flow rate (or variation of the injection correction factor) and the temperature profile during a test was carried out in order to establish a relationship between the rate of deposition of material in the injector nozzles and their temperature.

In addition, it was observed in the tests conducted that the temperature fluctuations during the process are, surprisingly, quite an important factor in the process of formation of the deposits. In other words, it was found that temperature fluctuations during the test tended to form a larger amount of deposits in the injector nozzles compared to tests where there was hardly any temperature variation, even though the temperature had been maintained at a relatively high level. Such fluctuations can be caused by varying the test conditions (i.e. at least one of engine speed and engine load).

Besides the influence of the temperature of the injector nozzle on the formation of deposits therein, the fuel flow rate was also considered. It might have been expected that high fuel flow rates would lead to faster deposition build up, due to the larger amount of fuel being combusted in a given time. However, surprisingly, it was found in tests that a high fuel flow rate may make it possible to remove the deposits from the injector nozzle, which is undesirable in the method of the present invention.

That said, with the aim of increasing the severity of formation of deposits in the injector nozzles, a method was defined for maximizing the formation of deposits in injector nozzles of GDI engines. That method involved a test carried out with the engine running, for which operating conditions were selected that provided a high temperature in the injector nozzle, preferably with moderate fuel flow rates, by avoiding high engine speed. Conditions of low engine load can be selected with moderate revolutions. A condition with the engine switched off, which generates lower temperatures in the injector nozzle, can also be employed to take into account the effects of the temperature gradient and low fuel flow rate during the test cycle.

Using conditions shown in **Table 1** below, a test cycle of around 10h duration can be carried out, in which preferred values of engine speed and load were established, with operation over a predetermined time interval. That is, the overall test cycle involved operations at the various conditions shown in the table.

**Table 1**

| **Condition** | **Speed (rpm)** | **Load (%)** | **Duration (min)** |
|---|---|---|---|
| 1 | 1300 to 1700 | 25 to 35 | 70 to 110 |
| 2 | 1800 to 2200 | 10 to 20 | 160 to 200 |
| 3 | 1300 to 1700 | 70 to 80 | 40 to 80 |
| 4 | 2300 to 2700 | 45 to 55 | 130 to 170 |
| 5 | 3300 to 3700 | 45 to 55 | 70 to 110 |
| 6 | 0 (engine switched off) | 0 (engine switched off) | 10 to 50 |

As can be seen, in this example, the first operating condition lasts from 70 to 110 min, has engine speed between 1300 and 1700 rpm and a load between 25 and 35%. The second operating condition lasts from 160 to 200 min, the engine speed is between 1800 and 2200 rpm and the load is between 10 and 20%. The third operating condition lasts from 40 to 80 min, the engine speed is between 1300 and 1700 rpm and the load is between 70 and 80%. The fourth operating condition lasts from 130 to 170 min, the engine speed is between 2300 and 2700 rpm and the load is between 45 and 55% are envisaged. The fifth operating condition lasts from 70 to 110 min, the engine speed is between 3300 and 3700 rpm and the load is between 45 and 55%. Finally, the sixth operating condition lasts from 10 to 50 min, and the engine is switched off to lower the temperature of the injector nozzles.

Preferably, both the engine speed and the engine load are maintained at a constant value, selected between the maximum and minimum values, for each condition/step during the predetermined time interval. Alternatively, at least one of engine speed and engine load is variable between the maximum and minimum values stipulated for each condition/step during the predetermined time interval. In a further alternative, some steps may be performed with constant engine speed and load, and other steps may be performed with variable engine speed and load.

The variations of engine speed and load over the cycle (i.e. from one step to another, or within a step) allow the temperature of the injector nozzles to vary over time in an optimized manner to cause the maximum possible deposition of material, as identified in the initial tests. In other words, if the conditions in each test step are substantially constant, it is preferable for the test cycle to include at least two testing steps, and for the testing step conditions (i.e. at least one of engine speed and engine load) to be varied between testing steps, to vary the engine temperature. In addition, high fuel flow rate is prevented by the selected conditions, to avoid removal of deposits.

Preferably, the test cycle presented in **Table 1** is carried out more than once. Even more preferably, the test cycle presented in **Table 1** is carried out 5 to 10 times, totalling approximately 50 to 100h of testing.

The method of testing is preferably carried out completely automatically and without supervision, requiring special programming of a system for automation of the test bench where the GDI engine to be tested is positioned, as well as a series of adjustments to its settings to comply with the technical requirements of the engine (direct injection of fuel with supercharging, for example).

During execution of the test, various parameters of the test bench and of the engine are optionally controlled by the automation system, among them the engine operating conditions, temperature of the admission air, cooling water temperature, temperatures of the oil and fuel. The engine is preferably tested with the original factory calibration.

Optionally, controls and specific limits for variables connected with unsupervised operation are established, so as to provide safe stopping of the test if any operational non-compliance occu rs.

Preferably, when carrying out the testing, the injection correction factor is monitored and recorded for assessing the results of the test for a particular fuel. The injection correction factor, which has a value of 1.0 in normal conditions, generally has a limit of preferably 1.3, i.e. 30% increase in the fuel flow rate to compensate any deviations of the injection time. Values above 1.3 are generally considered to be high and the engine could present operational problems due to the deposits in the injector nozzles.

Therefore it is important that the fuel provides a low level of deposits, by keeping the injection correction factor as close to unity as possible, guaranteeing operation in the design conditions of the engine, and preserving the original levels of engine performance, consumption and emissions.

Besides monitoring the variable "injection correction factor" to provide the results of the test, the injectors are also preferably assessed with a microscope to examine the level and distribution of the deposits.

Thus, based on the above description, the present invention provides a method for maximizing the formation of deposits in injector nozzles of GDI engines that is able to reproduce severe conditions of deposition of material in a few days, so that, in a short period of time, the test fuel can be assessed for tendency to form deposits. Thus, whilst the method maximises the formation of deposits for a given fuel, it is possible to identify well-performing fuels by the amount of deposit produced (i.e. a well-performing fuel will produce relatively little deposit, whereas a poorly-performing fuel will produce larger amounts of deposit).

In addition, the method of the present invention can be carried out completely automatically, without supervision and without interruption throughout the execution of the test cycles.

Numerous variations falling within the scope of protection of the present application are permitted. The invention is defined by the appended claims.

## Claims

1. Method for maximizing the formation of deposits in injector nozzles of gasoline direct injection, GDI, engines, wherein the method comprises at least one test cycle, and each test cycle comprises at least one testing step in which a predetermined condition of speed and load of the GDI engine is maintained for a specified period of time,
wherein, in said test cycle, there is at least one testing step in which:
the engine speed is maintained between 1300 and 3700 rpm;
the engine load is maintained between 10 and 80%; and
the specified period of time is from 10 to 200 minutes;
and wherein the method further comprises a testing step that lasts from 70 to 110 minutes, comprises an engine speed between 1300 and 1700 rpm and an engine load between 25 and 35%.

2. Method according to claim 1, wherein each one of the at least one test cycle comprises at least five testing steps.

3. Method according to claim 1 or 2, wherein the method comprises a testing step that lasts from 160 to 200 minutes, comprises an engine speed between 1800 and 2200 rpm and an engine load between 10 and 20%

4. Method according to any one of claims 1 to 3, wherein the method comprises a testing step that lasts from 40 to 80 minutes, comprises an engine speed between 1300 and 1700 rpm and an engine load between 70 and 80%.

5. Method according to any one of claims 1 to 4, wherein the method comprises a testing step that lasts from 130 to 170 minutes, comprises an engine speed between 2300 and 2700 rpm and an engine load between 45 and 55%.

6. Method according to any one of claims 1 to 5, **characterized in that** the method comprises a testing step that lasts from 70 to 110 minutes, comprises an engine speed between 3300 and 3700 rpm and an engine load between 45 and 55%.

7. Method according to any one of claims 1 to 6, wherein at least one test cycle additionally comprises a testing step that lasts from 10 to 50 minutes, in which the engine is switched off.

8. Method according to any one of claims 1 to 7, wherein the engine speed and load are maintained at a constant value for each testing step, for the respective specified period of time.

9. Method according to any one of claims 1 to 7, wherein at least one of engine speed and load is variable for each step for the respective specified period of time.

10. Method according to any one of claims 1 to 9, **characterized in that** each test cycle is repeated 5 to 10 times.

11. Method according to any one of claims 1 to 10, wherein the method is carried out automatically by a system of automation.

12. Method according to claim 11, wherein the system of automation controls, during execution of the method, at least one of: the engine operating conditions, temperature of the admission air, cooling water temperature, oil temperature and fuel temperature.

## Patentansprüche

1. Verfahren zum Maximieren der Bildung von Ablagerungen in Einspritzdüsen von Benzindirekteinspritzungsmotoren (gasoline direct injection, GDI), wobei das Verfahren mindestens einen Testzyklus umfasst, und jeder Testzyklus mindestens einen Testschritt umfasst, in dem eine vorbestimmte Bedingung von Drehzahl und Last des GDI-Motors für einen festgelegten Zeitraum aufrechterhalten wird,
wobei es in dem Testzyklus mindestens einen Testschritt gibt, in dem:
die Motordrehzahl zwischen 1300 und 3700 U/min aufrechterhalten wird;
die Motorlast zwischen 10 und 80 % aufrechterhalten wird; und
der festgelegte Zeitraum 10 bis 200 Minuten beträgt;
und wobei das Verfahren ferner einen Testschritt umfasst, der 70 bis 110 Minuten dauert, eine Motordrehzahl zwischen 1300 und 1700 U/min und eine Motorlast zwischen 25 und 35 % umfasst.

2. Verfahren nach Anspruch 1, wobei jeder des mindestens einen Testzyklus mindestens fünf Testschritte umfasst.

3. Verfahren nach Anspruch 1 oder 2, wobei das Verfahren einen Testschritt umfasst, der 160 bis 200 Minuten dauert, eine Motordrehzahl zwischen 1800 und 2200 U/min und eine Motorlast zwischen 10 und 20 % umfasst.

4. Verfahren nach einem der Ansprüche 1 bis 3, wobei das Verfahren einen Testschritt umfasst, der 40 bis 80 Minuten dauert, eine Motordrehzahl zwischen 1300 und 1700 U/min und eine Motorlast zwischen 70 und 80 % umfasst.

5. Verfahren nach einem der Ansprüche 1 bis 4, wobei das Verfahren einen Testschritt umfasst, der 130 bis 170 Minuten dauert, eine Motordrehzahl zwischen 2300 und 2700 U/min und eine Motorlast zwischen 45 und 55 % umfasst.

6. Verfahren nach einem der Ansprüche 1 bis 5, **dadurch gekennzeichnet, dass** das Verfahren einen Testschritt umfasst, der 70 bis 110 Minuten dauert, eine Motordrehzahl zwischen 3300 und 3700 U/min und eine Motorlast zwischen 45 und 55 % umfasst.

7. Verfahren nach einem der Ansprüche 1 bis 6, wobei mindestens ein Testzyklus zusätzlich einen Testschritt umfasst, der 10 bis 50 Minuten dauert, in dem der Motor ausgeschaltet ist.

8. Verfahren nach einem der Ansprüche 1 bis 7, wobei die Motordrehzahl und -last bei einem konstanten Wert für jeden Testschritt für den jeweils festgelegten Zeitraum aufrechterhalten werden.

9. Verfahren nach einem der Ansprüche 1 bis 7, wobei mindestens eine von Motordrehzahl und -last für jeden Schritt für den jeweils festgelegten Zeitraum variabel ist.

10. Verfahren nach einem der Ansprüche 1 bis 9, **dadurch gekennzeichnet, dass** jeder Testzyklus 5 bis 10 Mal wiederholt wird.

11. Verfahren nach einem der Ansprüche 1 bis 10, wobei das Verfahren automatisch von einem Automatisierungssystem ausgeführt wird.

12. Verfahren nach Anspruch 11, wobei das Automatisierungssystem während einer Ausführung des Verfahrens mindestens eines von Folgendem steuert: die Motorbetriebsbedingungen, die Temperatur der Ansaugluft, die Kühlwassertemperatur, die Öltemperatur und die Kraftstofftemperatur.

## Revendications

1. Procédé de maximisation de la formation de dépôts dans des buses d'injection de moteurs à injection directe de carburant (GDI), le procédé comprenant au moins un cycle de test, et chaque cycle de test comprenant au moins une étape de test dans laquelle une condition prédéterminée de vitesse et de charge du moteur à GDI est maintenue pendant une période de temps spécifiée,
dans lequel, dans ledit cycle de test, il existe au moins une étape de test dans laquelle
la vitesse de moteur est maintenue entre 1300 et 3700 tr/min ;
la charge de moteur est maintenue entre 10 et 80 % ; et
la période de temps spécifiée va de 10 à 200 minutes ;
et le procédé comprenant en outre une étape de test qui dure de 70 à 110 minutes, comprend une vitesse de moteur entre 1300 et 1700 tr/min et une charge de moteur située entre 25 et 35 %.

2. Procédé selon la revendication 1, dans lequel chacun de l'au moins un cycle de test comprend au moins cinq étapes de test.

3. Procédé selon la revendication 1 ou 2, le procédé comprenant une étape de test qui dure de 160 à 200 minutes, comprend une vitesse de moteur située entre 1800 et 2200 tr/min et une charge de moteur située entre 10 et 20 %.

4. Procédé selon l'une quelconque des revendications 1 à 3, le procédé comprenant une étape de test qui dure de 40 à 80 minutes, comprend une vitesse de moteur située entre 1300 et 1700 tr/min et une charge de moteur située entre 70 et 80 %.

5. Procédé selon l'une quelconque des revendications 1 à 4, le procédé comprenant une étape de test qui dure de 130 à 170 minutes, comprend une vitesse de moteur située entre 2300 et 2700 tr/min et une charge de moteur située entre 45 et 55 %.

6. Procédé selon l'une quelconque des revendications 1 à 5, **caractérisé en ce que** le procédé comprend une étape de test qui dure de 70 à 110 minutes, comprend une vitesse de moteur située entre 3300 et 3700 tr/min et une charge de moteur située entre 45 et 55 %.

7. Procédé selon l'une quelconque des revendications 1 à 6, dans lequel au moins un cycle de test comprend en outre une étape de test qui dure de 10 à 50 minutes, dans laquelle le moteur est éteint.

8. Procédé selon l'une quelconque des revendications 1 à 7, dans lequel la vitesse et la charge de moteur sont maintenues à une valeur constante pour chaque étape de test, pendant la période de temps spécifiée.

9. Procédé selon l'une quelconque des revendications 1 à 7, dans lequel la vitesse et/ou la charge de moteur sont variables pour chaque étape pendant la période de temps spécifiée respective.

10. Procédé selon l'une quelconque des revendications 1 à 9, **caractérisé en ce que** chaque cycle de test est répété de 5 à 10 fois.

11. Procédé selon l'une quelconque des revendications 1 à 10, le procédé étant effectué automatiquement par un système d'automatisation.

12. Procédé selon la revendication 11, dans lequel le système d'automatisation commande, pendant l'exécution du procédé : les conditions de fonctionnement de moteur, la température de l'air d'admission, la température de l'eau de refroidissement, la température de l'huile et la température du carburant.
